(19) Europäisches Patentamt
European Patent Office
Office européen des brevets

(11) Publication number: **0 114 400**
**B1**

(12) # EUROPEAN PATENT SPECIFICATION

(45) Date of publication of patent specification: **17.09.86**

(51) Int. Cl.⁴: **C 07 F 7/18,** C 08 K 9/06, C 08 K 5/54

(21) Application number: **83113131.3**

(22) Date of filing: **27.12.83**

(54) **The use of organofunctional silanes as binding agent for inorganic oxides or fillers.**

(30) Priority: **27.12.82 US 452938**

(43) Date of publication of application:
**01.08.84 Bulletin 84/31**

(45) Publication of the grant of the patent:
**17.09.86 Bulletin 86/38**

(84) Designated Contracting States:
**AT BE CH DE FR GB IT LI LU NL SE**

(56) References cited:
**EP-A-0 012 834**
**EP-A-0 068 813**
**DE-A-2 339 761**
**DE-A-2 427 091**
**DE-B-1 066 582**
**US-A-2 566 363**
**US-A-2 995 590**

(73) Proprietor: **UNION CARBIDE CORPORATION**
**39 Old Ridgebury Road**
**Danbury Connecticut 06817 (US)**

(72) Inventor: **Marsden, James Glenn**
**34 Buchard Lane**
**Rowayton Connecticut 06853 (US)**
Inventor: **Petty, Herbert Ewell**
**7 Winthrop Road**
**Bethel Connecticut 06801 (US)**
Inventor: **Vecere, Anthony Christopher**
**64 Smith Avenue**
**White Plains New York 10605 (US)**
Inventor: **Morabito, Patrick**
**122 North Terrace**
**Mt. Vernon New York 10550 (US)**

(74) Representative: **Wuesthoff, Franz, Dr.-Ing. et al**
**Patentanwälte Wuesthoff -v. Pechmann-**
**Behrens-Goetz Schweigerstrasse 2**
**D-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 114 400 B1**

Courier Press, Leamington Spa, England.

## Description

Background of the invention

This invention relates to the use of organofunctional silanes as binding agent compositions for foundry sands, particularly in binding agent compositions having especially good shelf life.

It is well known in the art that one can impart general improved strengths and increased humidity resistance to foundry cores by adding a silane compound to the resinous foundry binder used to form the cores. Foundry cores made with such resinous binders as phenolic/isocyanate systems, furan systems, oil modified polyol/polyisocyanate systems, phenolic resins and urea/phenolic resins have a tendency to lose strength and become weak upon exposure to humid conditions. As illustrated by U.S.—A—3,409,579 and 3,403,721, silane compounds have been added to such resinuous binders to increase the humidity resistance and general strength of foundry cores made with these binders. Aqueous dispersions of silane compounds have also been used as binders themselves (see U.S.—A—3,093,494).

It is known that aminoalkyl trialkoxysilanes, such as γ-aminopropyltrimethoxysilane, improve the adherence of thermosetting resins to inorganic oxide materials. It is furthermore known that these amino-silanes can be mixed with thermosetting phenolic resins and then the resulting mixtures can be mixed directly with sands or other inorganic oxide material to be shaped and solidified (cf. DE—A—1,252,853 and DE—B—1,494,381).

The use of N-(aminoalkyl-aminoalkylsilanes as adhesion improvers between thermosetting resins and inorganic oxide material is also known. These compounds are used in the same manner as the above-mentioned aminosilanes in which there is no substitution on the nitrogen atom (cf. U.S.—A—3,324,159).

Both the aminoalkylsilanes which are not substituted on the nitrogen atom and those which are substituted by aminoalkyl groups, all of which are referred to hereinafter as aminosilanes, improve the adhesion of thermosetting phenolic resins to inorganic oxide substances to virtually the same degree when they are mixed with the resins. This improvement of adhesion, however, diminishes in the course of time if these aminosilane-containing resins are stored for a relatively long time at room temperature. U.S.—A—4,256,623 reports that, after standing for only 14 days, for example, the adhesion-improving action of aminosilanes declines by about 40%, and at the end of only a month the adhesivizing effect produced by γ-aminopropyltriethoxysilane in phenolic resin has been reduced by one half.

It has been further reported that the loss of the adhesivizing action of the aminosilanes in mixture with thermosetting resins is probably due to a decomposition of these silanes in the resins. Therefore, there existed the problem of finding an adhesivizing agent which, when mixed with thermosetting resins, decomposes very slightly or not at all, and produces its adhesivizing action to the same or an only slightly lesser extent even after the resin has been stored for a relatively long time and which therefore will be useful in the preparation of binding agents for inorganic oxide materials such as, for example, foundry sands, such binding agents being made from ureido-functional silanated phenolic resins whose strength enhancing effectiveness will remain unaltered or only slightly reduced, even after a relatively long period of storage.

U.S.—A—3,671,562; 3,754,971 and 4,046,794 disclose ureido-functional organosilicon compounds and the use of same as coupling agents on inorganic substrates such as glass, clay, silica, hydrated silica, fumed silica, sand, e.g., foundry sand. EP—A—0 077 036 described ureido-functional organosilicon compounds having two hydrolyzable or hydroxy groups and in which at least one ureido-functional group is connected to silicon by groups containing at least 5 carbon atoms which are also useful as binding agents.

Despite repeated advances in the art there continues to remain the need to seek out and identify materials useful as binding agents which will impart good shelf life to the composition. It is believed that this invention fulfills this task and represents an advance over the existing art.

Summary of the invention

The organofunctional silanes used according to the invention are represented by the formula:

$$ZSiR_a\ (OR')_b\ (OR'')_c$$

wherein

R is individually an alkyl, aryl, alkaryl or aralkyl group containing from 1 to 12 carbon atoms;

R' is selected from $—CH_3$, $—C_2H_5$, $—C_3H_7$ and $—CH_2CH_2OCH_3$;

R'' is a sterically hindered hydrocarbon group, i.e.

$$—C(CH_3)_3,\ —CH_2C(CH_3)_3,\ —CH_2CH_2C(CH_3)_3,\ —C(CH_2CH_3)_3,\ \text{or}\ —C(CH_2CH_2CH_3)_3;$$

Z is a nitrogen containing group bonded to the silicon atom via a carbon-silicon bond;

a and b are individually 0, 1 or 2; and

c is 1, 2 or 3 wherein the sum of a+b+c equals 3.

Preferably R is an alkyl group containing from 1 to 4 carbon atoms;

Preferably R' is $—C_2H_5$;

Preferably R'' is $—C(CH_3)_3$,

and it is preferred that a=0, b=2 and c=1; preferably Z is of the general formula $NH_2CH_2CH_2CH_2—$ (DE—A—2 427 091 discloses the use of cyclohexylaminediethoxy-t-butoxy silane as a stabiliser for resins, containing ester groups. Earlier EP—A—0 068 813 discloses fungicidal 1,2,4-triazole and imidazole derivatives).

Description of the invention

In accordance with the invention there are used a special class of organofunctional silanes as binding agent compositions. It has been found, quite unexpectedly, that the use of the above defined organo-functional silanes containing at least 1 hindered alkoxy group will provide significantly greater performance stability when added to a curable binder, such as a hardenable resin, than would the corresponding non-hindered organofunctional silane.

The organofunctional silane used in the present invention can be prepared by reacting known organosilicon compounds. Examples of such reactions include:

(1) $ZSiR_a(OR')_{3-a} + {}_cR''OH \rightarrow ZSiR_a(OR')_b(OR'')_c + {}_cR'OH$

(2) $N{\equiv}C(CH_2)_xSiR_a(OR')_b(OR'')_c + H_2 \rightarrow NH_2CH_2(CH_2)_x{—}SiR_a(OR')_b(OR'')_c$

(3) $HSiR_a(OR')_b(OR'')_c + NH_2CH_2CH{=}CH_2 \xrightarrow{cat} NH_2(CH_2)_3SiR_a(OR')_b(OR'')_c$

(4) $Cl(CH_2)_xSiR_a(OR')_b(OR'')_c + 2NH_3 \rightarrow NH_2(CH_2)_xSiR_a(OR')_b(OR'')_c + NH_4Cl$

The reactions set forth above are generally described in US—A—2 832 754; 2 930 809; and 3 864 373. Because of the variety of known techniques for preparing organofunctional silanes suitable reactants will depend upon which reaction path is ultimately chosen. Reference to these patents and other known methods for preparing organofunctional silanes will identify useful reactants.

Suitable organofunctional silanes having at least one hindered alkoxy group include:

$NH_2CH_2CH_2CH_2Si(OtBu)(OEt)_2$

$NH_2CH_2CH_2NHCH_2CH_2CH_2Si(CH_3)(OtBu)_2$

$NH_2CH_2CH_2CH_2NHCH_2CH_2CH_2CH_2Si(OtBu)_2(OMe)$

$NH_2CH_2CH_2NHCH_2CH_2NHCH_2CH_2CH_2Si(OtBu)(OMe)_2$

$NH_2C(O)NHCH_2CH_2CH_2Si(CH_3)(OtBu)_2$

$NH_2C(O)NHCH_2CH_2NHCH_2CH_2CH_2Si(OtBu)_2(OEt)$

$NH_2CH_2CH(CH_3)Si(OtBu)_3$

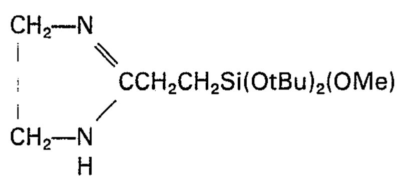

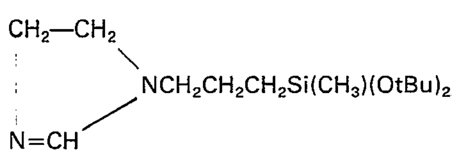

This invention is directed to improvements in foundry sands and foundry cores and molds made therefrom. The foundry sands useful in the present invention are conventional foundry sands such as silica sands having a high silica content, for example a silica content of at least 80% by weight. Examples of such foundry sands are (1) white silica sands such as Wedron White Silica sand, (99.8% by weight silica), Ottawa White Silica sand (99.8% silica), Minnesota White Silica sand (98.5% silica); (2) lake sands, such as Port Cresent sand (95.0% silica), Manley 20KK sand (91.9% silica), Nugent Lake sand (94.2% silica), Lake Shore sand (93.5% silica); and (3) banks sands such as Juniada Bank sand (90.2% silica). These foundry sands normally have a Grain Fineness Number (GFN) of about 50 to 90, as determined by the standard AFS method.

Other inorganic oxides or fillers can be bound by the binding agents pursuant to this invention and

they include any suitable fibrous or particulate inorganic substance. At the time of mixing the binding agent with the fillers, the fillers may be in the form of particles, spherical or approximately isometric, or they may be in the form of plates or needles (fibers). The size of the filler particles is not critical, any of the conventionally used fillers being suitable in this respect. Among the specific fillers which may be used in the present invention are asbestos, ground glass, kaolin and other clay minerals, silica, calcium silica, magnesium oxide, barium carbonate, barium sulfate (barytes), metal fibers and powders, glass fibers, refractory fibers, non-reinforcing carbon blacks, titanium dioxide, mica, talc, chopped glass, alumina, quartz, wollastdonite (calcium silicate), and inorganic coloring pigments.

The curable binders useful in the binding agent compositions of this invention are polymerizable or thermosetting to form three-dimensional structures and are capable of binding the inorganic oxide or filler into a shaped mass. Included as examples of suitable curable binders are the foundry binders or hardenable resins which when used with the ureido-functional silicon compounds disclosed in EP—A—0 077 036 show improved strength or resistance to humidity in the foundry core. Generally these foundry binders are the phenolic/polyisocyanate binder systems such as described in U.S.—A—3,409,579; furan binder systems such as described in U.S.—A—3,346,534; oil modified polyol/polyisocyanate binder systems such as described in U.S.—A—3,255,500; and phenolic and urea/phenolic resin binder systems such as described in U.S.—A—3,404,198 and 3,306,864.

Further illustrative of resins which can be effectively bonded include the thermosetting resins, such as the phenol formaldehyde resin, melamine-formaldehyde resins, alkyl resins, polyurethane resins, and epoxy resins.

More broadly, the invention can be applied to substantially any polymeric material in which improved adhesion to fillers or inorganic oxides is desired, including, for example, any of the rubbers, resins if plastics with which fillers, e.g., inorganic oxides, are conventionally employed. Such polymers include natural rubber; synthetic rubbers such as styrene-butadiene rubber; ethylene-propylene terpolymer rubber; urethane rubbers; polyolefins such as polyethylene, polypropylene, and polyisobutylene; poly-acrylonitrile; polybutadiene; copolymers of butadiene and acrylonitrile; polystyrene; poly(styreneacrylonitrile); copolymers of styrene with butadiene and acrylonitrile; copolymers of ethylene with propylene or butene-1 or vinyl acetate or maleic anhydride; polycarbonate resins; phenoxy resins, polyvinyl chloride; copolymers of vinyl chloride with vinyl acetate or other vinyl esters; polyvinyl acetate; linear polyesters; polyvinyl acetals; polyvinylidene chloride; copolymers of vinylidene chloride with vinyl chloride and acrylic acid; poly(methyl methacrylate); super-polyamides, e.g. nylon; polysulfones; allyl resins such as a polymer of diallyl phthalate; epoxy resins, phenolic resins; silicone resins; polyester resins including alkyl resins; poly(vinylacetate-vinyl chloride); poly(vinylidene chloride); thermoplastic polyurethanes; thermoplastic polyhydroxy ethers; thermoplastic polyesters; and poly (vinyl chloride-maleic anhydride). Preferred polymeric matrices are the thermosetting or curable resins, such as the hardenable foundry sand resins as described above.

The proportions of the organofunctional silane compound and curable binder in the novel binding agent compositions can be varied over a wide range. For example, the novel compositions can contain from 0.01 to 5, preferably 0.05 to 2 weight parts of the organofunctional silane compound per 100 weight parts of curable binder. The proportions of binding agent composition and sand used in making the novel foundry sand compositions can be varied over a wide range and are generally the same respectively as the proportions of coupling agent and sand conventionally employed in the art. While the organofunctional silane compounds can be employed undiluted, it usually is more convenient to employ them as solutions, e.g., 25 to 95%, in suitable solvents such as methanol, ethanol, and isopropanol because such solutions are easier to handle and disperse in the curable binder. They may also be mixed with other organofunctional silanes that do not contain a hindered alkoxy group provided the compounds are compatible and do not react to create any undesirable by products.

The following specific examples illustrate certain aspects of the present invention and, more particularly, point out methods of evaluating the same. All parts and percentages are by weight unless otherwise specified.

Preparation of sterically hindered alkoxy silanes

Example A

Into a 500 ml 3-necked flask equipped with a magnetic stirrer, heating mantle, thermometers, a 305 mm (12 in) distilling column packed with 3.175 mm (1/8 in) glass helices, addition funnel, distilling head and receiver was added 179.3 g (1.0 mole) of 3-aminopropyltrimethoxysilane. The flask was heated to 160°C and from the (heated) addition funnel 160 g (2.16 moles) of t-butanol was slowly added with the simultaneous distillation of methanol/t-butanol to the receivers. The rate of addition of t-butanol was kept slow in order to maintain as high a flask temperature as possible (150—170°C). Periodic sampling of the flask and lites for gas chromatograph analysis indicated that after 2.16 moles t-butanol had been added, approximately an 80% conversion of 3-aminopropyltrimethoxysilane to Compound A* had been achieved. Distillation of this material with 4 cuts (94—100°C at 27 mbar (20 mm Hg) produced 100 g of 94% pure aminopropyl-t-butoxydimethoxysilane (combined cuts 2, 3, 4). Cut 1, enriched in 3-aminopropyltrimethoxysilane was 30 grams.

Example B

Using the procedure described in Example A 3-aminopropyltriethoxysilane (1.0 mole) was reacted with t-butanol (5.0 moles) to convert 60% of the 3-aminopropyltriethoxysilane to Compound B*. This mixture was distilled and 3 cuts were made.

| Cut number | Weight | Temperature/ pressure | 3-aminopropyl triethoxy silane | Compound B |
|---|---|---|---|---|
| 1 | 85 g | 92°C/ (7.5 mm Hg) 10 mbar | 60% | 35% |
| 2 | 10 g | 95°C/ (7.5 mm Hg) 10 mbar | — | 90% |
| 3 | 76.5 g | 96°C/ (6.5 mmHg) 8.6 mbar | 3% | 94% |

Example C

An alternate process, indicated that when 165.9 g (0.75 moles) of 3-aminopropyltriethoxysilane and 55.6 g (0.75 moles) of t-butanol were heated together in a 300 $cm^3$ rocking autoclave for 4.5 hours at 165—180°C, a 15% conversion to Compound B was realized.

TABLE I

| Compound | Composition |
|---|---|
| A | $NH_2CH_2CH_2CH_2Si(OC[CH_3]_3)(OCH_3)_2$ |
| B | $NH_2CH_2CH_2CH_2Si(OC[CH_3]_3)(OC_2H_5)_2$ |

Example

Into a suitable vessel there is charged a commercially available furan type resin. Thereafter there is added 0.03 grams (0.2%, based on the resin) of an organofunctional silane. The mixture is blended for 2—4 hours and evaluated (initial evaluation).

The blended mixture is then allowed to age at room temperature.

Then 1500 grams of AFS testing Sand 50—70 are charged into a different vessel. The contents are mixed at a slow speed as 0.75—1.50 gram (0.05—0.1% based on the sand) of water and 3.75—6.0 grams (25—40% based on the resin) of a commercially available catalyst are added separately via syringe. The contents are further mixed for 2 minutes. To this second vessel there is added, via syringe, 15 grams (1% based on the sand) of the resin neat or the resin/silane prepared in the first vessel. Mixing is continued for 2 minutes. Immediately following mixing the molds were filled without compacting. The sand mixture is then pressed firmly into the mold with a #14 rubber stopper. The mold is then smoothed off with trowel and allowed to stand 24 hours.

Tensile strength is tested using a jug designed for briquet testing (ASTM C-190-63). The cross-head speed is (0.2 inches per minute) 5 mm/min.

The improved performance, particularly after aging of the resin/silane blend, provided by the organofunctional silane of this invention is demonstrated in the following examples. This data show the tensile strengh of sand/resin composites prepared within hours of adding the organofunctional silane to the resin and after the resin/silane blend has aged 6 months at room temperature.

TABLE II

| Organofunctional silane | Resin | Catalyst | Tensile strength, (psi) N/cm² Initial | 6 mo. at R.T. |
|---|---|---|---|---|
| $NH_2CH_2CH_2CH_2Si(OCH_3)_3$ | Borden thor | BSA 40% BOR | (213) 147 | (75) 52 |
| Silane A | Borden thor | BSA 40% BOR | (211) 146 | (186) 128 |
| $NH_2CH_2CH_2CH_2Si(OC_2H_5)_3$ | Borden thor | BSA 40% BOR | (195) 135 | (119) 82 |
| Silane B | Borden thor | BSA 40% BOR | (182) 126 | (168) 116 |
| $NH_2CH_2CH_2CH_2Si(OCH_3)_3$ | Acme 931 | TSA 25% BOR | (282) 195 | (166) 115 |
| Silane A | Acme 931 | TSA 25% BOR | (303) 209 | (266) 184 |
| $NH_2CH_2CH_2CH_2Si(OC_2H_5)_3$ | Delta 632X | BSA 30% BOR | (201) 139 | (89) 61 |
| Silane B | Delta 632X | BSA 30% BOR | (309) 213 | (159) 110 |

Example D

Preparation of 3-aminopropylmethoxydi-t-butoxysilane

Into a 1 liter, 3-necked, round-bottom flask equipped with a distillation column and head, and protected with a nitrogen blow-by, mechanical stirrer, heating mantle and thermometers was added 268.8 g (1.5 moles) of 3-aminopropyltrimethoxysilane, 444.6g (6.0 moles) of t-butanol and 10.8 g of a 25 wt.% solution of sodium methoxide in methanol. The resulting solution was heated to reflux (81—100°C) and a mixture of methanol and t-butanol was removed by fractional distillation over 3 hours. Gas chromatography indicated an 83% conversion of the starting silane to the mono-t-butoxy derivative. Continued distillation of the alcohol mixture over an additional 6 hours produced by gas chromatography a 14% conversion of the mono-t-butoxydimethoxysilyl derivative to the di t-butoxy component. An additional 7.5 moles (333.3 g) of t-butanol was added over 16 hours in increments of 3.5 moles, 1.0 mole and 3.0 moles while continuously removing methanol/t-butanol as a distillate. A total of 967.0 g distillate was collected to a flask temperature of 130°C. A gas chromatograph of a sample of the flask contents indicated 85% contained 3-aminoopropyldi-t-butoxymethoxysilane. Vacuum distillation yielded 54.0 forecut, 30.0 g residue, and 293.2 g of distillate which, by gas chromatographic 13C NMR analyses, was 94% 3-aminopropyldi-t-butoxymethoxysilane and 6% 3-aminopropyl-t-butoxydimethoxysilane.

Example E

Preparation of 3-aminopropyldimethoxy-t-butoxysilane

Into a 1 liter, 3-necked, round-bottom flask equipped with a distillation column and head (protected with a dry nitrogen blow-by), mechanical stirrer, thermometers, and heating mantle, was added 358.4 g (2.0 moles) of 3-aminopropyl-trimethoxysilane, 296.4 g (4.0 moles) of t-butanol, and 2.9 ml of 40% (in methanol) benzyltrimethylammonium methoxide (BMAM). The resulting solution was heated to reflux (flask temperature 90—100°C, head temperature 78—82°C) and over 3 hours removed 264.0 g of a mixture of methanol and t-butanol. An additional mole (74.1 g) of t-butanol and 3.6 ml of 40% BMAM was added with continued heating and removal of the alcohol mixture by distillation. A sample taken from the flask showed a 74% conversion of the original silane to the mono t-butoxy derivative by gas chromatography and nuclear magnetic resonance (13C) analyses. The contents of the flask were cooled, an additional 296.4 g (4.0 moles) of t-butanol and 3.6 ml of 40% BMAM were added, and the flask again heated and the methanol/t-butanol mixture removed by distillation. Re-examination of the flask contents indicated an increase to 81% conversion to the mono t-butoxy derivative by gas chromatography. No other products were detected. Distillation of the flask contents produced a distillation fraction, 238 g (boiling point, 85—86°C at 8 mbar (6 mm Hg), which was 96% 3-aminopropyldimethoxy-t-butoxysilane (4% 3-aminopropyltrimethoxysilane) by gas chromatographic analysis. A 13C NMR spectrum confirmed the structure.

**Claims**

1. The use of organofunctional silanes of the general formula:

$$ZSiR_a(OR')_b(OR'')_c$$

wherein

R is individually an alkyl, aryl, alkaryl or aralkyl group containing from 1 to 12 carbon atoms;
R′ is individually selected from $—CH_3$, $—C_2H_5$, $—C_3H_7$, and $—CH_2CH_2OCH_3$;
R″ is $—C(CH_3)_3$; $—CH_2C(CH_3)_3$; $—CH_2CH_2C(CH_3)_3$; $—C(CH_2CH_3)_3$; or $—C(CH_2CH_2CH_3)_3$;

Z is a nitrogen containing group bonded to the silicon atom via a carbon-silicon bond;
a and b are individually 0, 1 or 2; and
c is 1, 2 or 3 wherein
the sum of a+b+c equals 3, as binding agent for an inorganic oxide or filler materials comprising a curable binder.

2. The use of organofunctional silanes according to claim 1, R being an alkyl group containing 1 to 4 carbon atoms.

3. The use of organofunctional silanes according to claim 1 or 2, R' being $-C_2H_5$.

4. The use of organofunctional silanes according to claim 1, 2 or 3, R" being $-C(CH_3)_3$.

5. The use of organofunctional silanes according to claim 1, 2, 3 or 4, Z being $NH_2CH_2CH_2CH_2-$.

**Patentansprüche**

1. Verwendung von organofunktionellen Silanen der allgemeinen Formel

$$ZSiR_a(OR')_b(OR'')_c,$$

worin
R eine Alkyl-, Aryl-, Alkaryl- oder Aralkylgruppe mit 1 bis 12 Kohlenstoffatomen;
R' $-CH_3$, $-C_2H_5$, $-C_3H_7$ oder $-CH_2CH_2OCH_3$;
R"$-C(CH_3$, $-CH_2C(CH_3)_3$, $-CH_2CH_2C(CH_3)_3$, $-C(CH_2CH_3)_3$ oder $-C(CH_2CH_2CH_3)_3$;
Z ein Stickstoff-haltige Gruppe, gebunden an das Silicium-atom über eine C-Si-Bindung, ist und
a und b 0, 1 oder 2 und
c 1, 2 oder 3 bedeuten und die Summe a+b+c=3 ist,
als Bindemittel für ein anorganisches Oxid oder Füllstoffe enthaltend einen härtbaren Binder.

2. Verwendung der organofunktionellen Silane nach Anspruch 1, bei denen R eine Alkylgruppe mit 1 bis 4 Kohlenstoffatomen ist.

3. Verwendung der organofunktionellen Silane nach Anspruch 1 oder 2, worin R' $-C_2H_5$.

4. Verwendung der organofunktionellen Silane nach Anspruch 1, 2 oder 3, worin R" $-C(CH_3)_3$ ist.

5. Verwendung der organofunktionellen Silane nach Anspruch 1, 2, 3 oder 4, worin Z $NH_2CH_2CH_2CH_2-$ ist.

**Revendications**

1. Utilisation de silanes organofonctionnels de formule générale:

$$ZSiR_a(OR')_b(OR'')_c$$

dans laquelle
R représente, individuellement, un groupe alkyle, aryle, alkaryle ou aralkyle contenant 1 à 12 atomes de carbone;
R' est choisi, individuellement, entre les groupes $-CH_3$, $-C_2H_5$, $-C_3H_7$ et $-CH_2CH_2OCH_3$;
R"est un groupe $-C(CH_3)_3$; $-CH_2C(CH_3)_3$; $-CH_2CH_2C(CH_3)_3$; $-C(CH_2CH_3)_3$ ou $-C(CH_2CH_2CH_3)_3$;
Z est un groupe contenant de l'azote lié à l'atome de silicium par une liaison carbone-à-silicium;
a et b ont, individuellement, la valeur 0, 1 ou 2; et
c a la valeur 1, 2 ou 3, la somme a+b+c étant égale à 3,
comme liant pour des oxydes ou des charges inorganiques comprenant un liant durcissable.

2. Utilisation de silanes organofonctionnels suivant la revendication 1, R étant un groupe alkyle contenant 1 à 4 atomes de carbone.

3. Utilisation de silanes organofonctionnels suivant la revendication 1 ou 2, R' étant un groupe $-C_2H_5$.

4. Utilisation de silanes organofunctionnels suivant la revendication 1, 2 ou 3, R" étant un groupe $-C(CH_3)_3$.

5. Utilisation de silanes organofonctionnels suivant la revendication 1, 2, 3 ou 4, Z étant un groupe $NH_2CH_2CH_2CH_2-$.